# EUROPÄISCHE PATENTANMELDUNG

(11) **EP 2 107 487 A1**
(43) Veröffentlichungstag der Anmeldung: **07.10.2009**
(21) Anmeldenummer: 08006772.1
(22) Anmeldetag: 03.04.2008
(51) Int. Cl.: G06F 21/00

(54) **Verwendung spezifischer digitalisiert abrufbarer Hardwaremerkmale von elektronischen Speichermedien zur Herstellung von auf diesen Speichermedien individualisiert verschlüsselt gespeicherten Daten zur Unterbindung der Manipulation und/oder der unkontrollierten Verbreitung von als schutzwürdig erachteten elektronischen Daten**

(71) Anmelder: Elm, Oliver, 66115 Saarbrücken (DE)
(72) Erfinder: Elm, Oliver, 66115 Saarbrücken (DE)
(74) Vertreter: Schmid, Rudolf

(57) **Zusammenfassung**

Um die Manipulationssicherheit von als schutzwürdig erachteten elektronischen Daten und/oder deren unkontrollierte Verbreitung zu unterbinden, werden erfindungsgemäß das oder die spezifischen digitalisiert abrufbaren physikalischen Merkmale von elektronischen Speichermedien bei der Verschlüsselung solcher von elektronischen Datenträgern in einen Computer eingelesenen oder auf diesem Computer bereits vorhandenen oder anderweitig dort verfügbar gemachten Daten so einbezogen, dass dieses Alleinstellungsmerkmal oder diese Alleinstellungsmerkmale als Information und somit das jeweilige elektronische Speichermedium selbst zur Entschlüsselung dieser Daten zwingend vorhanden sein müssen. Erfindungsgemäß werden die aus dem Verschlüsselungsvorgang hervorgegangenen Daten auf das jeweils zugehörige elektronische Speichermedium übertragen und können nur unter Verwendung des Alleinstellungsmerkmals oder der Alleinstellungsmerkmale dieses Speichermediums entschlüsselt werden.

## Beschreibung

Die Erfindung bezieht sich auf die Verwendung einer Vorrichtung in Form eines elektronischen Speichermediums dergestalt, dass spezifische Eigenschaften des Speichermediums zunächst über die jeweilige Geräteeingangsschnittstelle für elektronische Speichermedien eines Computers ermittelt, dann zur Verschlüsselung von Daten in einem Computer herangezogen werden und anschließend die individualisiert für das jeweilige Speichermedium verschlüsselten Daten über eine geeignete Computerausgangsschnittstelle auf ebendieses Speichermedium übertragen und dort abgespeichert werden.

Sollen für schutzwürdig erachtete Daten, die sich auf beliebigen elektronischen, computerlesbaren Datenträgern befinden, einer mehr oder weniger öffentlichen Nutzergruppe zugänglich gemacht werden, wobei den Nutzern der Daten zwar Gelegenheit gegeben werden soll, diese einzusehen, zugleich aber eine Manipulation bzw. eine unkontrollierte Verbreitung der Daten verhindert werden soll, entsteht die Notwendigkeit, die Daten mit einem Kopierschutz zu versehen, der die unerwünschte Nutzung verhindert.

Schutzverfahren, die dem Stand der Technik entsprechen, verfolgen bei der Lösung dieses Problems unterschiedliche Ansätze, die entweder den Kopiervorgang selbst erschweren bzw. unmöglich machen sollen, wobei beispielsweise wesentliche Daten beim Kopieren nicht erfasst und/oder nicht ohne Veränderungen vom Original auf die Kopie übertragen werden können oder wobei bei der Erstellung des Originals bestimmte physikalische Bereiche des elektronischen Speichermediums so verändert werden, dass diese Veränderung nicht reproduzierbar ist, zum Beispiel weil chaotische physikalische Effekte ausgenutzt werden, die damit erzeugten Veränderungen für das Original jedoch fortan typisch sind und vor einer Nutzung der Daten zunächst verifiziert werden können.

Die Erfindung nutzt elektronische Speichermedien hingegen so, dass weder das Kopieren der Daten des elektronischen Speichermediums erschwert oder unterbunden wird noch dass geheime oder chaotisch erzeugte Daten in mehr oder weniger unzugängliche Bereiche des Speichermediums geschrieben werden. Vielmehr werden physikalische Eigenschaften des Speichermediums ermittelt, welche dieses Speichermedium sowohl von andersartigen als auch von baugleichen Speichermedien eindeutig unterscheiden.

Daher ist die Erfindung auf solche elektronischen Speichermedien beschränkt, die einerseits Hardwareeigenschaften aufweisen, welche sie physikalisch auch von baugleichen Speichermedien in Form eines oder mehrerer Alleinstellungsmerkmale unterscheiden und welche andererseits die Möglichkeit bieten, dieses Merkmal oder diese Merkmale informationstechnisch zu erfassen, das heißt zu digitalisieren, und damit nutzbar zu machen. Beispielhaft für ein solches Alleinstellungsmerkmal sei hier die dem jeweiligen elektronischen Speichermedium eindeutig zuordenbare individuelle Seriennummer genannt.

Um Daten unter Ausnutzung spezifischer Hardwaremerkmale im Sinne dieser Erfindung zu schützen, ist kein bestimmtes Verschlüsselungsverfahren erforderlich. Es ist lediglich dafür Sorge zu tragen, dass das informationstechnisch erfasste und digitalisierte physikalische Alleinstellungsmerkmal des jeweiligen elektronischen Speichermediums derart in den oder die verwendeten Verschlüsselungsalgorithmen integriert werden kann, dass sich im günstigsten Fall alle Ausgangsbits eines einzelnen Verschlüsselungsvorganges mit einer Wahrscheinlichkeit von 50% ändern, wenn sich ein Bit im digitalisierten Alleinstellungsmerkmal ändert.

Durch die erfindungsgemäße Ausnutzung spezifischer Hardwaremerkmale bei der Verschlüsselung von Daten mit Hilfe eines starken Verschlüsselungsalgorithmus, der dem Stand der Technik entspricht, entstehen Datenstrukturen, die zwei wesentliche Merkmale aufweisen: Zum einen unterscheiden sich die mittels unterschiedlicher Merkmale verschlüsselten Daten ganz erheblich, so dass bei großen Datenmengen im optimalen Fall die Wahrscheinlichkeit von zwei übereinstimmenden Bits an gleicher Position innerhalb der Datenstruktur jeweils etwa 50% beträgt. Weiterhin trägt nur das Speichermedium, dessen Alleinstellungsmerkmal zur Verschlüsselung einer Datenstruktur herangezogen wurde, die Information in sich, welche zur Entschlüsselung der Daten benötigt wird.

Werden verschlüsselte Datenstrukturen von einem elektronischen Speichermedium, mit dessen Alleinstellungsmerkmal sie verschlüsselt wurden, auf ein anderes andersartiges oder baugleiches elektronisches Speichermedium kopiert, steht das jeweils zur Entschlüsselung benötigte Merkmal nicht mehr zur Verfügung.

Sollen Daten über die Ermittlung des Merkmals entschlüsselt und visualisiert werden, scheitert dieser Versuch folgerichtig bei allen Kopien auf anderen Datenträgern, weil das benötigte Merkmal dann nicht oder nicht korrekt ermittelt werden kann. Bei der Verwendung von entsprechend starken Verschlüsselungsalgorithmen, die dem Stand der Technik entsprechen, kann außerdem verhindert werden, dass Daten in verschlüsselter Form verändert oder der bzw. die Codierungsschlüssel aus den verschlüsselten Daten ermittelt werden können.

Die Erfindung ermöglicht daher, die Manipulation und/oder die unkontrollierte Verbreitung von als schutzwürdig erachteten Daten wirksam zu unterbinden.

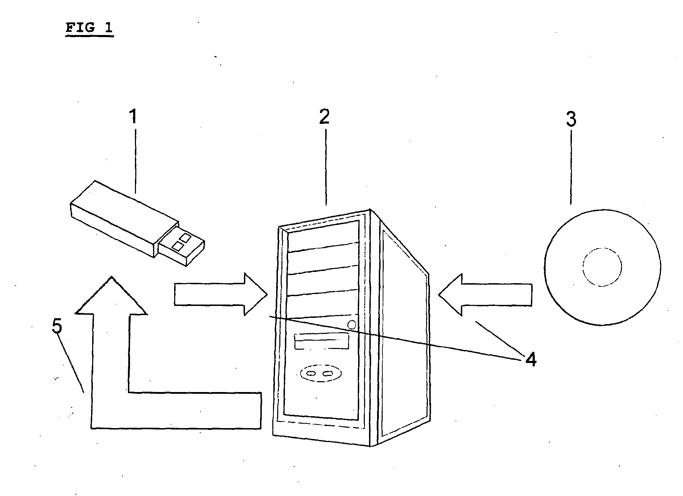

Im Folgenden wird die Erfindung anhand eines Ausführungsbeispiels und mit Bezug auf die beigefügte Zeichnung FIG 1 beschrieben, in der die Verwendung eines elektronischen Speichermediums im Sinne der Erfindung symbolisch dargestellt ist. Dabei werden von einem beliebigen elektronischen Datenträger 3 - FIG 1, bei dem es sich zum Beispiel um eine CD-ROM, eine DVD oder einen USB-Stick handeln kann, als schutzwürdig erachtete Daten über eine geeignete Schnittstelle 4 - FIG 1 zur Datenübertragung in den Computer 2 - FIG 1 eingelesen und unter Verwendung eines elektronischen Speichermediums 1 - FIG 1 für das jeweilige elektronische Speichermedium 1 - FIG 1 individualisiert verschlüsselt, wobei ein zuvor über die Schnittstelle 4 - FIG 1 an den Computer 2 - FIG 1 von ebendiesem Speichermedium 1 - FIG 1 übermitteltes, digitalisiertes physikalisches Alleinstellungsmerkmal dieses elektronischen Speichermediums 1 - FIG 1 ermittelt und verwendet wurde. Nach dem individualisierten Verschlüsselungsprozess im Computer 2 - FIG 1 werden die mit dem digitalisierten physikalischen Alleinstellungsmerkmal des jeweiligen elektronischen Speichermediums 1 - FIG 1 verschlüsselten Daten über eine geeignete Schnittstelle 5 - FIG 1 des Computers 2 - FIG 1 auf dem zugehörigen elektronischen Speichermedium 1 - FIG 1 gespeichert. Damit ist sichergestellt, dass ausschließlich das jeweilige elektronische Speichermedium 1 - FIG 1 sowohl Träger der hierfür individualisiert verschlüsselten Daten sein kann als auch aufgrund des nur auf ebendiesem elektronischen Speichermedium 1 - FIG 1 enthaltenen eindeutigen Alleinstellungsmerkmals eine korrekte Entschlüsselung dieser Daten ermöglicht.

Selbstverständlich können die Ausführungsformen der einzelnen in der Zeichnung FIG 1 symbolhaft illustrierten Elemente von der Darstellung in der Zeichnung abweichen. Insbesondere ist die Art des elektronischen Datenträgers nicht auf die in der Zeichnung symbolisch abgebildete CD beschränkt, sondern schließt sämtliche anderen elektronischen computerlesbaren Datenträger mit ein. Ebenso ist das in der Zeichnung mit dem Symbol eines USB-Sticks skizzierte elektronische Speichermedium nicht auf diese Ausführungsform beschränkt, sondern umfasst gleichermaßen alle anderen elektronischen computerlesbaren Speichermedien mit einem entsprechenden digitalisierbarem physikalischen Alleinstellungsmerkmal.

Um die Manipulationssicherheit von als schutzwürdig erachteten elektronischen Daten und/oder deren unkontrollierte Verbreitung zu unterbinden, werden erfindungsgemäß das oder die spezifischen digitalisiert abrufbaren physikalischen Merkmale von elektronischen Speichermedien bei der Verschlüsselung solcher von elektronischen Datenträgern in einen Computer eingelesenen oder auf diesem Computer bereits vorhandenen oder anderweitig dort verfügbar gemachten Daten so einbezogen, dass dieses Alleinstellungsmerkmal oder diese Alleinstellungsmerkmale als Information und somit das jeweilige elektronische Speichermedium selbst zur Entschlüsselung dieser Daten zwingend vorhanden sein müssen. Erfindungsgemäß werden die aus dem Verschlüsselungsvorgang hervorgegangenen Daten auf das jeweils zugehörige elektronische Speichermedium übertragen und können nur unter Verwendung des Alleinstellungsmerkmals oder der Alleinstellungsmerkmale dieses Speichermediums entschlüsselt werden.

### Liste der Bezugszeichen der Zeichnung FIG 1

**FIG 1****:**
   - 1: Elektronisches Speichermedium
   - 2: Computer
   - 3: Elektronischer Datenträger
   - 4: Schnittstelle zur Datenübertragung in den Computer
   - 5: Schnittstelle zur Datenübertragung aus dem Computer nach Verschlüsselung der Daten mit dem digitalisiertem Alleinstellungsmerkmal des elektronischen Speichermediums zur Speicherung auf dem zugehörigen elektronischen Speichermedium

## Patentansprüche

1. Verwendung spezifischer digitalisiert abrufbarer Hardwaremerkmale von elektronischen Speichermedien zur Herstellung von auf diesen Speichermedien individualisiert verschlüsselt gespeicherten Daten zur Unterbindung der Manipulation und/oder der unkontrollierten Verbreitung der elektronischen Daten, **gekennzeichnet durch** die Verschlüsselung von als schutzwürdig erachteten Daten, welche von beliebigen elektronischen computerlesbaren Datenträgern in einen Computer eingelesen wurden unter Einbeziehung eines oder mehrerer spezifischer digitalisierter physikalischer Merkmale eines elektronischen Speichermediums, wobei dieses Merkmal oder diese Merkmale das jeweilige elektronische Speichermedium sowohl von andersartigen als auch von baugleichen elektronischen Speichermedien eindeutig unterscheidet, und **gekennzeichnet durch** das Abspeichern der so verschlüsselten Daten auf genau demjenigen elektronischen Speichermedium, mit Hilfe dessen spezifischer physikalischer Merkmale die Verschlüsselung durchgeführt wurde, und **gekennzeichnet dadurch, dass** nur dasjenige elektronische Speichermedium, mit Hilfe dessen spezifischer physikalischer Merkmale die Verschlüsselung der als schutzwürdig erachteten Daten durchgeführt wurde, die zur Entschlüsselung dieser Daten erforderliche digitalisierte Information zur Verfügung stellen kann.

2. Verwendung nach Anspruch 1, **dadurch gekennzeichnet, dass** ein elektronisches Speichermedium, auf dem mit Hilfe dessen spezifischer physikalischer Merkmale individualisiert verschlüsselte Daten abgespeichert wurden, zur Entschlüsselung der Daten herangezogen wird, indem dessen spezifische physikalische Merkmale zur Entschlüsselung der digitalisierten Information abgerufen werden.

3. Verwendung nach Anspruch 1, **dadurch gekennzeichnet, dass** ein elektronisches Speichermedium, mit Hilfe dessen spezifischer physikalischer Merkmale Daten verschlüsselt und auf einem beliebigen anderen elektronischen Datenträger gespeichert wurden, zur Entschlüsselung der Daten herangezogen wird, indem dessen spezifische physikalische Merkmale zur Entschlüsselung der digitalisierten Information abgerufen werden.

4. Verwendung nach Anspruch 1, **dadurch gekennzeichnet, dass** die zu verschlüsselnden Daten nicht von einem beliebigen elektronischen computerlesbaren Datenträger in einen Computer eingelesen werden, sondern auf diesem bereits vorhanden sind oder auf diesem Computer gescannt oder für diesen Computer digitalisiert oder auf andere Art und Weise auf diesem Computer verfügbar gemacht werden.
